# EUROPÄISCHE PATENTSCHRIFT

(11) **EP 3 646 982 B1**
(45) Veröffentlichungstag und Bekanntmachung des Hinweises auf die Patenterteilung: **05.05.2021**
(21) Anmeldenummer: 19203271.2
(22) Anmeldetag: 15.10.2019
(51) Int. Cl.: B23K 11/31

(54) **SCHWEISSELEKTRODE**
WELDING ELECTRODE
ÉLECTRODE DE SOUDAGE

(30) Priorität: 16.10.2018 DE 102018125692
(43) Veröffentlichungstag der Anmeldung: 06.05.2020
(73) Patentinhaber: Doceram GmbH, 44309 Dortmund (DE)
(72) Erfinder: Stuba, Tobias Lars, 45663 Recklinghausen (DE)
(74) Vertreter: Rätsch, Caroline

(56) Entgegenhaltungen:
- EP-A1- 0 640 429
- CN-U- 202 251 633
- CN-U- 205 331 119
- DE-U1-202012 006 321

## Beschreibung

Die Erfindung betrifft eine Schweißelektrode mit den Merkmalen des Oberbegriffs des Patentanspruchs 1.

Schweißelektroden sind aus dem Stand der Technik bekannt. Sie dienen dazu, metallische Gegenstände auf einem Bauteil, beispielsweise einem Blech, zu verschweißen. Bei den metallischen Gegenständen kann es sich beispielsweise um eine Buckelmutter oder einen Bolzen handeln.

Bei Buckelmuttern kommt ein Zentrierstift zum Einsatz. Durch Bewegung der Kolbenstange kann der Zentrierstift aus dem Gehäuse hinaus- und in das Gehäuse hineinbewegt werden. Der Zentrierstift dient zur Zentrierung des Bleches. Hierbei greift der Zentrierstift durch eine Öffnung des Bleches hindurch, wobei das Blech auf der Unterelektrode aufliegt. Auf der endseitigen Spitze des Zentrierstiftes wird die Buckelmutter aufgesetzt. Eine Oberelektrode drückt die Buckelmutter in Richtung auf das Blech. Dabei wird eine elektrische Verbindung zwischen der Oberelektrode, der Buckelmutter, dem Blech und der Unterelektrode hergestellt. Aufgrund des Spannungsabfalls zwischen der Buckelmutter und dem Blech entsteht eine starke Wärmeentwicklung, die das Verschweißen der Buckelmutter mit dem Blech bewirkt. Bei dem Einsatz von Zentrierstiften werden zwei Varianten unterschieden. Bei der ersten Variante ist der Zentrierstift in dem Gehäuse gegen die Kraft einer Feder verschieblich gelagert. Das Blech wird meist von oben auf den Zentrierstift aufgesetzt und dadurch zentriert. Anschließend drückt die Oberelektrode die zuvor auf den Zentrierstift aufgesetzte Buckelmutter gegen die Federkraft auf das Blech. Sobald die Verschweißung erfolgt ist, bewegt sich die Oberelektrode wieder nach oben und das Blech kann zusammen mit der aufgeschweißten Mutter von dem Zentrierstift abgenommen werden.

Bei der zweiten Variante ist der Zentrierstift über den eingangs genannten Kolbenstangenaufsatz mit der Kolbenstange verbunden. Die Kolbenstange ist in einem Gehäuse verschieblich gelagert und wird pneumatisch betätigt. Eine derartige Schweißelektrode ist aus der DE 20 2012 006 321 U1, welche die Basis für den Oberbegriff des Anspruchs 1 bildet, bekannt. Durch die pneumatische Betätigung der Kolbenstange kann der Zentrierstift aktiv in das Gehäuse gezogen werden. Die Kolbenstange ist in einem Gleitlager geführt und mittels einer Stangendichtung gegen das Gehäuse abgedichtet.

Stangendichtungen sind ferner aus der EP 0 640 429 A1, der CN 202 251 633 U und der CN 205 331 119 U bekannt. Die zweite Variante kommt bei Bauteilen zum Einsatz, bei denen das Blech nicht von dem Zentrierstift abgenommen werden kann. Aus diesem Grund wird der Zentrierstift eingefahren und damit aus der Öffnung des Bleches herausgezogen. Auf diese Variante ist die Erfindung gerichtet.

Aus dem Stand der Technik ist ferner das Widerstandschweißen von Bolzen bekannt. Dabei wird eine Schweißelektrode eingesetzt, die einen Hohlraum und einen Zugang in Form einer Öffnung für den Bolzen bereitstellt. Ein typischer Bolzen verfügt dabei über einen Kopf und einen Stift. Der Kopf dient zur Auflage auf dem Blech. Er wird mit dem Blech verschweißt. Der Stift kann glatt ausgebildet sein oder über ein Außengewinde oder ein Innengewinde verfügen.

Zum Verschweißen des Bolzens mit dem Blech wird das Blech auf die Unterelektrode aufgelegt. Der Bolzen wird mit seinem Stift durch eine Bohrung des Bleches gesteckt und teilweise in der Schweißelektrode aufgenommen. Anschließend drückt eine Oberelektrode den Bolzen weiter in die Schweißelektrode hinein, bis der Kopf des Bolzens zur Auflage auf dem Blech gelangt. Dabei wird eine elektrische Verbindung zwischen der Oberelektrode, dem Bolzen, dem Blech und der Unterelektrode hergestellt. Aufgrund des Spannungsabfalls zwischen dem Bolzenkopf und dem Blech entsteht eine starke Wärmeentwicklung, die das Verschweißen des Bolzens mit dem Blech bewirkt. Die Erfindung ist auch auf Schweißelektroden zum Bolzenschweißen gerichtet.

Das Widerstandsschweißen hat sich insbesondere in der Automobilindustrie, aber auch in anderen Industriezweigen, grundsätzlich bewährt. Dies gilt auch für die aus der DE 20 2012 006 321 U1 bekannte Schweißelektrode. Allerdings wurde gefunden, dass die bekannte Kombination aus Gleitlager und Stangendichtung anfällig ist.

Der Erfindung liegt die **Aufgabe** zugrunde, die Lebensdauer der bekannten Schweißelektrode zu erhöhen und die Ausfallquote zu reduzieren.

Diese Aufgabe wird gelöst durch eine Schweißelektrode mit den Merkmalen des Patentanspruchs 1.

Der Erfindung liegt die Erkenntnis zugrunde, dass im Betrieb der aus der DE 20 2012 006 321 U1 bekannten Schweißelektrode das Gleitlager in Richtung auf die Stangendichtung wandert und die Stangendichtung druckbeaufschlagt. Hierdurch kann die Dichtwirkung der Stangendichtung negativ beeinflusst werden. Außerdem besteht die Gefahr, dass die Stangendichtung mechanischen Schaden nimmt. Hier greift die Erfindung ein.

Erfindungsgemäß bildet das Gehäuse einen ersten Vorsprung, an dem sich die Stangendichtung abstützt sowie einen zweiten Vorsprung, an dem sich das Gleitlager abstützt. Durch diese Trennung wird die Stangendichtung auch dann geschont, wenn ein hoher Überdruck im ersten Zylinderraum das Gleitlager in Richtung auf die Stangendichtung drückt. Der zweite Vorsprung hält das Gleitlager stets in einer definierten Stellung in Bezug auf die Stangendichtung. Diese kann so aussehen, dass das Gleitlager in einem bestimmten Abstand zu der Stangendichtung gehalten wird. Alternativ wird zugelassen, dass sich das Gleitlager und die Stangendichtung berühren, allerdings nur bis zu einem gewissen Grad, um zu vermeiden, dass die Dichtungseigenschaft der Stangendichtung eingeschränkt wird.

Erfindungsgemäß wird also verhindert, dass das Gleitlager aufgrund eines Überdrucks im ersten Zylinderraum unkontrolliert die Stangendichtung gedrückt wird. Die Erhöhung der Lebensdauer und Verbesserung der Funktionssicherheit sind erheblich.

Erfindungsgemäß ist die Stangendichtung in einem Dichtungssitz und das Gleitlager in mindestens einem ersten Lagersitz aufgenommen, wobei der erste Lagersitz einen größeren Innendurchmesser aufweist als der Dichtungssitz. Aufgrund des größeren Innendurchmessers werden Funktion und Einstecktiefe von Gleitlager und Stangendichtung getrennt. Ggf. kann vorgesehen sein, dass die Stangendichtung geringfügig in Axialrichtung über den Dichtungssitz hinausragt. Dann kommt sie zur Anlage an das Gleitlager. Diese Anlage kann die Dichtungswirkung der Stangendichtung erhöhen. Sie darf aber lediglich so stark vorgespannt werden, dass ihre Dichtungswirkung nicht negativ beeinflusst wird oder die Dichtung Schaden nimmt. Wichtig ist, dass die Stangendichtung und das Gleitlager in axialer Richtung in definierten Positionen zueinander gehalten werden.

In dem Zylinderraum ist der Kolben geführt. Er kann - je nach Einsatz der Schweißelektrode - einseitig oder beidseitig mit Druckluft beaufschlagt werden. Erfindungsgemäß ist der Lagersitz näher am Zylinderraum angeordnet als der Dichtungssitz. Es ergibt sich also eine Abstufung. Sofern ein Überdruck im Zylinderraum herrscht, werden die Stangendichtung und das Gleitlager in die sich verjüngende Abstufung gedrückt. Der erste und der zweite Vorsprung sorgen für einen sicheren Anschlag für die Stangendichtung und das Gleitlager.

Vorteilhafterweise ist das Gleitlager in einem zweiten Lagersitz aufgenommen, dessen Innendurchmesser größer ist als der erste Lagersitz. Das Gleitlager stützt sich also vorteilhaft an zwei Vorsprüngen ab. Aufgrund der sich daraus ergebenden Lastenverteilung des Gleitlagers arbeitet das Gleitlager auch bei hohen Drücken einwandfrei. Der zweite Lagersitz schafft zusätzlich eine erhöhte Betriebssicherheit. Im Übrigen bietet die Verbreiterung die Möglichkeit einer vorteilhaften Befestigung/Sicherung des Gleitlagers, wie es im Folgenden noch näher erläutert wird.

In der Regel wird bei Betrieb der Schweißelektrode der Druck in dem Zylinderraum größer sein als auf der anderen Seite der Lagerdichtung. Dort dient die Kolbenstange zur Aufnahme eines Zentrierstiftes oder eines Bolzens und kann hierzu einen Kolbenstangenaufsatz aufweisen, der mit der Kolbenstange verschraubt sein kann. Der Kolbenstangenaufsatz wird vorzugsweise in einem Spülluftraum geführt, durch den hindurch Spülluft geleitet wird, um Schweißspritzer und andere Verunreinigungen von der Schweißelektrode wegzublasen. Insbesondere wird ein Eintreten in den Spülluftraum verhindert. In Ausnahmefällen - beispielsweise bei einem fehlerhaften Spülluftdruck - kann es zu einem Überdruck im Spülluftraum kommen. In diesem Zusammenhang wird vorteilhaft vorgeschlagen, dass das Gleitlager durch einen Sprengring in dem ersten und ggf. zweiten Lagersitz gehalten ist. Hierdurch wird verhindert, dass das Gleitlager und/oder die Stangendichtung aus ihrem Sitz herausgepresst werden. Die durch den zweiten Lagersitz geschaffene Breite ermöglich besonders gut den Einsatz eines Sprengrings. Hierbei handelt es sich um einen Sicherungsring, der mit Vorspannung in das Gehäuse einclipsbar ist.

Die Kolbenstange ist in dem Gehäuse verschieblich gelagert. Dies ermöglicht sowohl eine Bolzen- als auch eine Buckelmutter-Verschweißung. Hierzu weist die Schweißelektrode vorteilhafterweise einen Kolbenstangenaufsatz auf, der lösbar, insbesondere schraubbar mit der Kolbenstange verbunden ist. Auch bei einem Verschleiß kann der Kolbenstangenaufsatz ausgewechselt werden. Aufgrund der Lösbarkeit des Kolbenstangenaufsatzes ist die erfindungsgemäße Schweißelektrode individuell an den jeweiligen Schweißvorgang anpassbar und kann insoweit auch umgerüstet werden. Zur Erleichterung der Montage und Demontage des Kolbenstangenaufsatzes weist die Kolbenstange vorteilhafterweise ein Profil zum Eingriff eines Schraubenschlüssels auf. Hierdurch kann die Kolbenstange fixiert werden, so dass der Kolbenstangenaufsatz leicht fixiert oder gelöst, insbesondere auf- oder abgeschraubt werden kann. Eine derartige Konstruktion gewährleistet auch den Schutz der übrigen - teilweise empfindlichen - Komponenten der Schweißelektrode. Hierzu gehören die Stangendichtung und das Gleitlager.

Eine Weiterbildung der Erfindung ist dadurch gekennzeichnet, dass das Gehäuse eine Oberseite aufweist und dass das Profil der Kolbenstange derart am Ende der Kolbenstange angeordnet ist, dass es in einer Endstellung der Kolbenstange über die Oberseite hinausragt. Eine derartige Konstruktion gestattet einen freien Zugang zu der Kolbenstange, so dass der Kolbenstangenaufsatz problemlos abgenommen oder aufgesetzt werden kann.

Vorzugsweise ist der Zylinderraum mit einer Anschlussplatte verschlossen, die lösbar mit dem Gehäuse verbunden ist. Eine derartige Konstruktion macht die Schweißelektrode noch vielseitiger einsetzbar. Denn durch die Anschlussplatte kann die Schweißelektrode an ihre Umgebung angepasst werden. Darüber hinaus schafft die Anschlussplatte eine Inspektionsöffnung zum Inneren des Gehäuses. Hier ist ein Kolben angeordnet. Auch das Gleitlager und die Stangendichtung sind nach Abnahme des Kolbens zugänglich und können montiert und demontiert werden.

Zweckmäßig weist die Anschlussplatte einen Druckluftanschluss auf, der vorzugsweise in die Anschlussplatte eingeschraubt ist. Eine derartige Konstruktion ist kompakt und gestattet vorteilhaft die Einbringung von Luft in das Gehäuse zur Betätigung der Kolbenstange.

Die Kolbenstange dient dazu, einen Zentrierstift in das Gehäuse zu ziehen. Sie dient alternativ dazu, einen zu verschweißenden Bolzen abzustützen, während der Bolzen gegen die Kraft der Kolbenstange in das Gehäuse gedrückt wird. Zur Steuerung der Kolbenstange ist vorteilhaft vorgesehen, dass sie einen Kolben aufweist, der in dem Zylinderraum des Gehäuses geführt ist und einen ersten Raum von einem zweiten Raum trennt. Beide Räume können vorteilhaft mit Druckluft beaufschlagt werden. Bei der Verschweißung von Bolzen wird zweckmäßig lediglich der zweite (unteren) Raum mit Druckluft beaufschlagen.

Auch der Kolben sollte nach Möglichkeit zugänglich und beispielsweise zu Wartungszecken montier- und demontierbar sein. In diesem Zusammenhang wird es als vorteilhaft angesehen, wenn der Kolben mittels einer Sicherungsschraube an der Kolbenstange fixiert ist. Hierdurch kann er von der Kolbenstange abgenommen werden. Nach seiner Abnahme ist das Gleitlager und die Stangendichtung vorteilhaft zugänglich.

Im Folgenden wir die Erfindung anhand eines bevorzugten Ausführungsbeispiels im Zusammenhang mit der anhängenden **Zeichnung** näher erläutert. Die Zeichnung zeigt in
- Figur 1: ein Ausführungsbeispiel einer erfindungsgemäßen Schweißelektrode in einer Seitenansicht;
- Figur 2: das Ausführungsbeispiel nach Figur 1 in einer Schnittansicht; und
- Figur 3: ein Detail der Schnittansicht nach Figur 2.

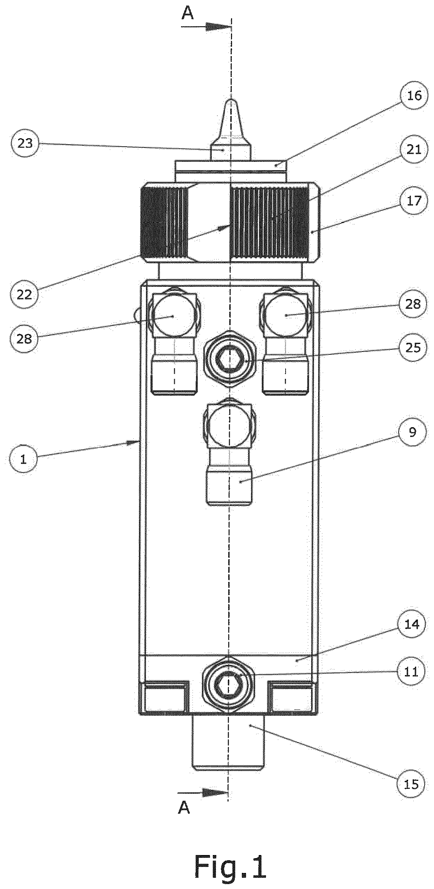

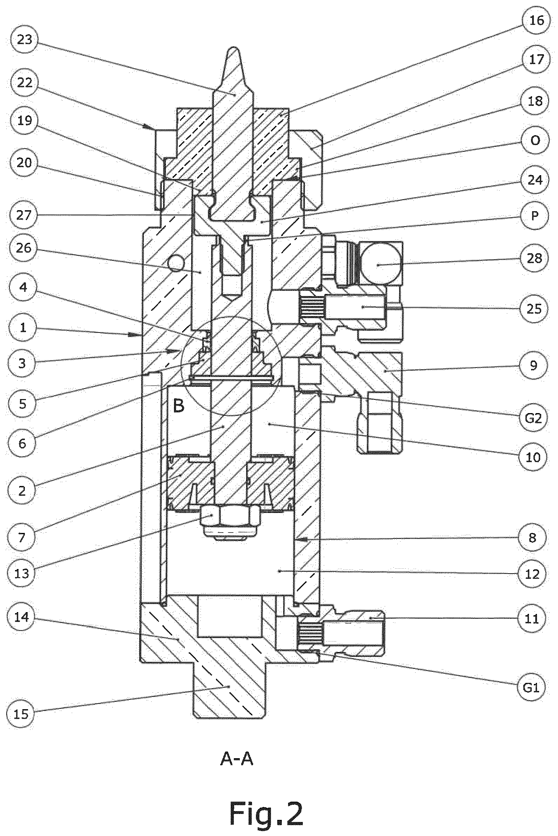

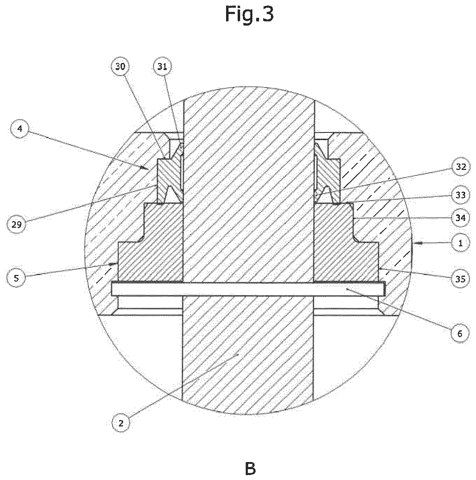

Im Folgenden wird auf die Figuren 1 und 2 Bezug genommen, die ein Ausführungsbeispiel der erfindungsgemäßen Schweißelektrode zeigen. Die Schweißelektrode weist ein Gehäuse 1 auf. In dem Gehäuse 1 ist eine Kolbenstange 2 beweglich gelagert. Hierzu weist das Gehäuse eine mehrstufige Dichtungsaufnahme 3 auf, in der eine Stangendichtung 4 und ein Gleitlager 5 aufgenommen sind. Ein Sprengring 6 sichert das Gleitlager 5 in der Dichtungsaufnahme 3. Die Dichtungsaufnahme 3 wird im Zusammenhang mit Figur 3 noch näher im Detail erläutert.

An einem Ende der Kolbenstange 2 ist ein Kolben 7 angeordnet, der in einem Zylinderraum 8 des Gehäuses 1 geführt ist. Über einen ersten Druckluftanschluss 9 kann Druckluft in einen ersten Raum 10 des Zylinderraumes 8 eingeleitet werden. Durch einen zweiten Druckluftanschluss 11 kann Druckluft in einen zweiten Raum 12 des Zylinderraumes 8 eingelassen werden. Der erste Druckluftanschluss 9 und der zweite Druckluftanschluss 11 sind in das Gehäuse 1 eingeschraubt. Hierzu weist das Gehäuse jeweils Gewinde Gl, G2 auf.

Der Kolben 7 ist mittels einer Mutter 13 an der Kolbenstange 2 gesichert.

Mit dem Bezugszeichen 14 ist eine Anschlussplatte gekennzeichnet. Die Anschlussplatte 14 verschließt den Zylinderraum 8 und ist vorzugsweise mittels Schrauben mit dem Gehäuse verbunden. Durch die Abnehmbarkeit der Anschlussplatte 14 ist der Zylinderraum 8 z.B. für Inspektionszwecke zugänglich. Insbesondere kann der Kolben 7 inspiziert und ggf. ausgetauscht werden. Gleiches gilt für die Stangendichtung 4 und das Gleitlager 5.

Darüber hinaus kann die erfindungsgemäße Schweißvorrichtung durch eine geeignete Wahl der Austauschplatte 14 an unterschiedliche maschinelle Umgebungen angepasst werden. Beispielsweise kann der Zapfen 15 der Anschlussplatte 14 als Gewinde oder, wie gezeigt, als gewindeloser Zapfen ausgebildet sein. Auch zapfenlose Anschlussplatten 14 sind denkbar. Dann weist die Anschlussplatte 14 z.B. Bohrungen für Befestigungsschrauben auf. Eine kompakte Konstruktion wird dadurch geschaffen, dass das Gewinde Gl in der Anschlussplatte 14 ausgebildet ist.

An seiner der Anschlussplatte 14 abgewandten Seite weist das Gehäuse eine Unterelektrode 16 auf, die mit einer Überwurfmutter 17 an dem Gehäuse 1 fixiert werden kann. Vorzugsweise weist die Unterelektrode 16 einen zweckmäßig umlaufenden Flansch 18 auf, der von der Überwurfmutter übergriffen wird. Die Unterelektrode stützt sich mit einer Schulter 19 an der Innenseite des Gehäuses 1 ab. Die Überwurfmutter 17 ist auf ein Außengewinde 20 des Gehäuses aufgeschraubt und schafft dadurch eine haltbare Befestigung der Unterelektrode 16 an dem Gehäuse 1.

Die Überwurfmutter 17 kann manuell an dem Gehäuse 1 festgelegt werden. Hierzu weist sie eine Rändelung 21 auf. Das Abschrauben erfolgt in aller Regel ebenfalls manuell. Sofern sich die Überwurfmutter 17 im Betrieb verspannt haben sollte, weist sie einen Vorsprung 22 für einen Hakenschlüssel auf, mit dem sich die Überwurfmutter unidirektional, also nur in Öffnungsrichtung, bewegen lässt.

Das dargestellte Ausführungsbeispiel dient zur Verschweißung von Buckelmuttern auf einem Werkstück, zum Beispiel einem Blech. Hierzu ist in der Unterelektrode ein Zentrierstift 23 verschieblich geführt, der in einem Kolbenstangenaufsatz 24 aufgenommen ist. Der Kolbenstangenaufsatz 24 ist mit der Kolbenstange 2 verschraubt. Dies gestattet es, dass auch andere Kolbenstangenaufsätze mit der Kolbenstange 2 verbunden werden können. Zum Beispiel ist es möglich, auch Bolzen mit der erfindungsgemäßen Schweißvorrichtung (mit einem Blech) zu verschweißen. Dann wird man die Unterelektrode 16 und den Kolbenstangenaufsatz 24 entsprechend anpassen.

Im Folgenden sei der Vollständigkeit halber kurz das Verfahren des Buckelmutterschweißens beschrieben. Das (hier nicht gezeigte) Blech wird mit einer Öffnung auf den Zentrierstift 23 platziert. Sodann wird auf dem Zentrierstift 23 die Buckelmutter aufgenommen. Von oben wird eine Oberelektrode auf die Buckelmutter herabgesenkt, die die Buckelmutter auf das Blech drückt. Sobald die Buckelmutter das Blech berührt, fließt ein Strom und die Buckelmutter verschweißt mit dem Blech. Die Verschweißung kann auch in einer seitlichen Ausrichtung der Schweißelektrode erfolgen.

Über die Kolbenstange 2 ist der Zentrierstift aktiv in das Gehäuse ziehbar. Hierzu wird durch den ersten Druckluftanschluss 9 Druckluft in den ersten Raum 10 geleitet. Der Kolben 7 bewegt sich mit der Kolbenstange 2 in Richtung der Anschlussplatte 14. Hierdurch wird der Zentrierstift 23 in die Unterelektrode 16 eingezogen. Die Stangendichtung 4 sorgt dafür, dass die Druckluft nicht entweicht. Zum Ausfahren des Zentrierstiftes 23 wird Druckluft durch den zweiten Druckluftanschluss 11 in den zweiten Raum 12 des Zylinderraumes 8 gelassen.

Über einen dritten Druckluftanschluss 25 wird Reinigungsluft in einen dritten Raum 26 eingelassen. Die Reinigungsluft kann durch einen Spalt 27 zwischen dem Kolbenstangenaufsatz 24 und dem Gehäuse 1 entweichen und tritt durch die Unterelektrode 16 aus dem Gehäuse 1 aus. Die Reinigungsluft sorgt dafür, dass während des Schweißvorganges Schweißspritzer und andere Verunreinigungen von der Schweißstelle (und dem Zentrierstift 23) weggeblasen werden. Über Wasseranschlüsse 28 wird die Schweißelektrode gekühlt.

Zur Montage und Demontage des Kolbenstangenaufsatzes 34 weist die Kolbenstange 2 ein Profil P auf, mittels dessen die Kolbenstange während der Montage oder Demontage gehalten werden kann. Hierdurch werden die empfindlichen Komponenten, wie Dichtungen, Führungen und Kolben, geschont. Das Profil P ist vorzugsweise aus dem Gehäuse 1 der Schweißelektrode bewegbar, so dass es frei zugänglich ist. Die Länge der Kolbenstange 2 ist also so groß, dass das Profil P in einer (bei aufrechter Schweißelektrode) oberen Anschlagposition über eine Oberseite O des Gehäuses hinausragt.

Es wird auf Figur 3 Bezug genommen, die das Detail B aus Figur 2 zeigt. Mit dem Bezugszeichen 2 ist die Kolbenstange gekennzeichnet. Die Stangendichtung 4 ist in einem Dichtungssitz 29 aufgenommen und liegt an einem ersten Vorsprung 30 an. Sie weist vorzugsweise Dichtlippen 31, 32 auf, die an der Kolbenstange 2 anliegen.

Die Kolbenstange 2 ist in einem Gleitlager 5 axial verschieblich geführt. Das Gleitlager stützt sich an einem zweiten Vorsprung 33 des Gehäuses 1 ab und ist vorteilhaft in einem ersten Lagersitz 34 aufgenommen. Durch den zweiten Vorsprung 33 ist die axiale Endstellung des Gleitlagers 5 definiert. Insbesondere kann die axiale Lage des Gleitlagers 5 so gewählt werden, dass das Gleitlager 5 die Stangendichtung 4 nicht oder - wie in Figur 3 dargestellt - mit einer geringfügigen Vorspannung berührt. Eine geringe Vorspannung kann den vorteilhaften Effekt haben, dass die Stangendichtung 4 etwas zusammengedrückt wird und sich dadurch noch besser an die Kolbenstange 2 anschmiegt. Insbesondere wird aber durch den zweiten Vorsprung 33 vermieden, dass die Stangendichtung 4 so stark zusammengedrückt wird, dass sie Schaden nimmt.

Erfindungsgemäß ist der Innendurchmesser des ersten Lagersitzes 34 größer als der Dichtungssitz 29.

Vorteilhafterweise ist das Gleitlager 5 auch in einem zweiten Lagersitz 35 aufgenommen. Hierdurch verbreitert sich das Gleitlager 5, was Stabilitätsvorteile aufweist und die Betriebssicherheit erhöht. Darüber hinaus schafft der größere Durchmesser auch die vorteilhafte Sicherung des Gleitlagers 5 durch den Sprengring 6. Letzter ist vorteilhafterweise aus Edelstahl ausgebildet. Er ist dadurch nicht magnetisierbar.

Die Erfindung schafft eine Schweißelektrode, die aufgrund der besonderen Ausgestaltung der Stangendichtung und des Gleitlagers eine besonders hohe Funktionssicherheit und Lebensdauer aufweist.

### Bezugszeichenliste

- 1: Gehäuse
- 2: Kolbenstange
- 3: Dichtungsaufnahme
- 4: Stangendichtung
- 5: Gleitlager
- 6: Sprengring
- 7: Kolben
- 8: Zylinderraum
- 9: Druckluftanschluss
- 10: erster Raum
- 11: Druckluftanschluss
- 12: zweiter Raum
- 13: Mutter
- 14: Anschlussplatte
- 15: Zapfen
- 16: Unterelektrode
- 17: Überwurfmutter
- 18: Flansch
- 19: Schulter
- 20: Außengewinde
- 21: Rändelung
- 22: Vorsprung
- 23: Zentrierstift
- 24: Kolbenstangenaufsatz
- 25: Druckluftanschluss
- 26: dritter Raum
- 27: Spalt
- 28: Wasseranschluss
- 29: Dichtungssitz
- 30: erster Vorsprung
- 31: Dichtlippe
- 32: Dichtlippe
- 33: zweiter Vorsprung
- 34: erster Lagersitz
- 35: zweiter Lagersitz

- G1: Gewinde
- G2: Gewinde
- P: Profil
- O: Oberseite (des Gehäuses)

## Patentansprüche

1. Schweißelektrode, mit
- einem Gehäuse (1), und
- einer Kolbenstange (2), die in dem Gehäuse (1) in verschieblich gelagert ist,
- wobei die Kolbenstange (2) in einem Gleitlager (5) geführt ist und einen Kolben (7) aufweist, der in einem Zylinderraum (8) des Gehäuses (1) geführt ist,
- wobei in dem Gehäuse (1) eine Stangendichtung (4) angeordnet ist, die von der Kolbenstange (2) durchgriffen wird und den Zylinderraum (8) abdichtet,
- wobei sich die Stangendichtung (4) an einem ersten Vorsprung (30) des Gehäuses abstützt, und
- wobei die Stangendichtung (4) in einem Dichtungssitz (29) des Gehäuses (1) und das Gleitlager (5) in mindestens einem ersten Lagersitz (34) des Gehäuses (1) aufgenommen ist,
**dadurch gekennzeichnet,**
- **dass** sich das Gleitlager (5) mindestens an einem zweiten Vorsprung (33) des Gehäuses (1) abstützt, und
- **dass** der erste Lagersitz (34) einen größeren Innendurchmesser aufweist als der Dichtungssitz (29) und
- **dass** der erste Lagersitz (34) näher am Zylinderraum angeordnet ist als der Dichtungssitz (29), so dass sich eine Abstufung ergibt.

2. Schweißelektrode nach Anspruch 1, **dadurch gekennzeichnet, dass** das Gleitlager (5) in einem zweiten Lagersitz (35) aufgenommen ist, dessen Innendurchmesser größer ist als der erste Lagersitz (34) .

3. Schweißelektrode nach Anspruch 1 oder 2, **dadurch gekennzeichnet, dass** das Gleitlager (5) durch einen Sprengring (6) in dem ersten Lagersitz (34) und ggf. dem zweiten Lagersitz (35) gehalten ist.

4. Schweißelektrode nach einem der Ansprüche 1 bis 3, **dadurch gekennzeichnet, dass** die Kolbenstange (2) ein Profil (P) zum Eingriff eines Schraubenschlüssels aufweist.

5. Schweißelektrode nach Anspruch 4, **dadurch gekennzeichnet, dass** das Gehäuse (1) eine Oberseite (O) aufweist und das Profil (P) der Kolbenstange (2) derart am Ende der Kolbenstange angeordnet ist, dass das Profil (P) in einer Endstellung der Kolbenstange über die Oberseite (O) hinausragt.

6. Schweißelektrode nach einem der Ansprüche 1 bis 5, **dadurch gekennzeichnet, dass** der Zylinderraum (8) mit einer Anschlussplatte (14) verschlossen ist, die lösbar mit dem Gehäuse (1) verbunden ist.

7. Schweißelektrode nach Anspruch 6, **dadurch gekennzeichnet, dass** die Anschlussplatte (14) einen Druckluftanschluss (11) aufweist, der vorzugsweise in die Anschlussplatte eingeschraubt ist.

8. Schweißelektrode nach einem der Ansprüche 1 bis 7, **dadurch gekennzeichnet, dass** die Kolbenstange (2) einen Kolben (7) aufweist, der in dem Zylinderraum (8) des Gehäuses (1) geführt ist.

9. Schweißelektrode nach Anspruch 8, **dadurch gekennzeichnet, dass** der Kolben (7) mittels einer Sicherungsschraube (13) an der Kolbenstange fixiert ist.

## Claims

1. Welding electrode, with
- a housing (1), and
- a piston rod (2), which is displaceably mounted in the housing (1),
- the piston rod (2) being guided in a sliding bearing (5) and having a piston (7), which is guided in a cylinder space (8) of the housing (1),
- a rod seal (4), which is passed through by the piston rod (2) and seals off the cylinder space (8), being arranged in the housing (1),
- the rod seal (4) being supported on a first projection (30) of the housing, and
- the rod seal (4) being located in a sealing seat (29) of the housing (1) and the sliding bearing (5) being located in at least one first bearing seat (34) of the housing (1),
**characterized**
- **in that** the sliding bearing (5) is supported at least on a second projection (33) of the housing (1), and
- **in that** the first bearing seat (34) has a greater inside diameter than the sealing seat (29) and
- **in that** the first bearing seat (34) is arranged closer to the cylinder space than the sealing seat (29), so that a stepped arrangement is obtained.

2. Welding electrode according to Claim 1, **characterized in that** the sliding bearing (5) is located in a second bearing seat (35), the inside diameter of which is greater than the first bearing seat (34).

3. Welding electrode according to Claim 1 or 2, **characterized in that** the sliding bearing (5) is held in the first bearing seat (34) and possibly the second bearing seat (35) by a retaining ring (6).

4. Welding electrode according to one of Claims 1 to 3, **characterized in that** the piston rod (2) has a profile (P) for the engagement of a spanner.

5. Welding electrode according to Claim 4, **characterized in that** the housing (1) has an upper side (O) and the profile (P) of the piston rod (2) is arranged at the end of the piston rod in such a way that, in an end position of the piston rod, the profile (P) protrudes beyond the upper side (O).

6. Welding electrode according to one of Claims 1 to 5, **characterized in that** the cylinder space (8) is closed by a connection plate (14), which is detachably connected to the housing (1).

7. Welding electrode according to Claim 6, **characterized in that** the connection plate (14) has a compressed air connection (11), which is preferably screwed into the connection plate.

8. Welding electrode according to one of Claims 1 to 7, **characterized in that** the piston rod (2) has a piston (7), which is guided in the cylinder space (8) of the housing (1).

9. Welding electrode according to Claim 8, **characterized in that** the piston (7) is fixed on the piston rod by means of a securing screw (13).

## Revendications

1. Électrode de soudage, comprenant
- un boîtier (1), et
- une tige de piston (2) qui est montée de manière coulissante dans le boîtier (1),
- la tige de piston (2) étant guidée dans un palier lisse (5) et comportant un piston (7) qui est guidé dans un espace cylindrique (8) du boîtier (1),
- une garniture d'étanchéité de tige (4) étant disposée dans le boîtier (1), laquelle est traversée par la tige de piston (2) et étanchéifie l'espace cylindrique (8),
- la garniture d'étanchéité de tige (4) prenant appui sur une première saillie (30) du boîtier, et
- la garniture d'étanchéité de tige (4) étant reçue dans un siège de garniture d'étanchéité (29) du boîtier (1) et le palier lisse (5) étant reçu dans au moins un premier siège de palier (34) du boîtier (1),
**caractérisé en ce que**
- le palier lisse (5) prend appui au moins sur une deuxième saillie (33) du boîtier (1), et
- le premier siège de palier (34) a un diamètre intérieur supérieur à celui du siège d'étanchéité (29) et
- le premier siège de palier (34) est disposé plus près de l'espace cylindrique que le siège d'étanchéité (29) de façon à obtenir un gradin.

2. Électrode de soudage selon la revendication 1, **caractérisée en ce que** le palier lisse (5) est reçu dans un deuxième siège de palier (35) dont le diamètre intérieur est supérieur à celui du premier siège de palier (34).

3. Électrode de soudage selon la revendication 1 ou 2, **caractérisée en ce que** le palier lisse (5) est maintenu par un circlip (6) dans le premier siège de palier (34) et éventuellement le deuxième siège de palier (35).

4. Électrode de soudage selon l'une des revendications 1 à 3, **caractérisée en ce que** la tige de piston (2) présente un profil (P) destiné à l'engagement d'une clé à molette.

5. Électrode de soudage selon la revendication 4, **caractérisée en ce que** le boîtier (1) présente une face supérieure (O) et le profil (P) de la tige de piston (2) est disposé à l'extrémité de la tige de piston de manière à ce que, lorsque la tige de piston est dans une position extrême, le profil (P) fasse saillie de la face supérieure (O).

6. Électrode de soudage selon l'une des revendications 1 à 5, **caractérisée en ce que** l'espace cylindrique (8) est fermé par une plaque de raccordement (14) qui est reliée de manière amovible au boîtier (1).

7. Électrode de soudage selon la revendication 6, **caractérisée en ce que** la plaque de raccordement (14) présente une borne d'air comprimé (11) qui est de préférence vissée dans la plaque de raccordement.

8. Électrode de soudage selon l'une des revendications 1 à 7, **caractérisée en ce que** la tige de piston (2) comporte un piston (7) qui est guidé dans l'espace cylindrique (8) du boîtier (1).

9. Électrode de soudage selon la revendication 8, **caractérisée en ce que** le piston (7) est fixé à la tige de piston au moyen d'une vis de blocage (13).
